# EUROPÄISCHE PATENTSCHRIFT

(11) **EP 3 601 848 B1**
(45) Veröffentlichungstag und Bekanntmachung des Hinweises auf die Patenterteilung: **04.08.2021**
(21) Anmeldenummer: 18711010.1
(22) Anmeldetag: 07.03.2018
(51) Int. Cl.: F16H 57/04

(54) **SYSTEM MIT ÖLEINFÜLLVORRICHTUNG FÜR EIN GETRIEBE**
SYSTEM WITH OIL FILLING DEVICE FOR A TRANSMISSION
SYSTÈME AVEC DISPOSITIF DE REMPLISSAGE D'HUILE POUR UN ENGRENAGE

(30) Priorität: 24.03.2017 DE 102017002945
(43) Veröffentlichungstag der Anmeldung: 05.02.2020
(73) Patentinhaber: SEW-EURODRIVE GmbH & Co. KG, 76646 Bruchsal (DE)
(72) Erfinder: SCHWEIKERT, Daniel, 76646 Bruchsal (DE); SIEGEL, Philipp, 76676 Graben-Neudorf (DE)
(86) Internationale Anmeldenummer: PCT/EP2018/025058
(87) Internationale Veröffentlichungsnummer: WO 2018/171945

(56) Entgegenhaltungen:
- DE-A1-102006 053 757
- US-A- 5 014 445
- US-A1- 2010 111 718
- US-B1- 7 546 693

## Beschreibung

Die Erfindung betrifft ein System mit Öleinfüllvorrichtung für ein Getriebe.

Es ist allgemein bekannt, dass Getriebe mit ölbefülltem Innenraumbereich zu Schmierungszwecken für die im Eingriff miteinander befindlichen Verzahnungsteile vorgesehen werden.

Aus der DE 10 2006 053 757 A1 ist als nächstliegender Stand der Technik eine Vorrichtung zur Befüllung von Getriebegehäusen mit Getriebeöl bekannt.

Aus der US 5 014 445 A ist ein Füllregler für Flüssigkeit bekannt.

Aus der US 5 860 459 A ist ein Verfahren zum Füllen einer automatischen Übertragung mit einer Arbeitsflüssigkeit bekannt.

Aus der DE 10 2006 053 757 A1 ist eine Vorrichtung zur Befüllung von Getriebegehäusen mit Getriebeöl bekannt.

Aus der US 2010 / 0111718 A1 ist ein Hydrauliksystem für eine Übertragungsvorrichtung mit Pumpeneinlassverteiler.

Aus der US 5 014 445 ist eine Übertragungsvorrichtung mit Flüssigkeits-Füllstands-Reglervorrichtung bekannt.

Aus der US 7 546 693 B1 ist Öleinfüllvorrichtung bekannt.

Der Erfindung liegt daher die Aufgabe zugrunde, ein System weiterzubilden, wobei ein Ölbefüllen eines Getriebes weiterbildbar sein soll.

Erfindungsgemäß wird die Aufgabe bei dem System nach den in Anspruch 1 angegebenen Merkmalen gelöst.

Wichtige Merkmale der Erfindung bei dem System sind, dass es mit Öleinfüllvorrichtung und mit einem Getriebe vorgesehen ist, wobei das Getriebe eine Ausnehmung aufweist,
wobei die Öleinfüllvorrichtung eine Schlitzbuchse aufweist, welche eine axial durchgehende Ausnehmung aufweist, durch welche eine Konus-Einheit hindurchragt, welche auf der vom Getriebe abgewandten Seite der Schlitzbuchse ein Außengewinde aufweist, auf welches eine Mutter aufgeschraubt ist,
wobei die Konus-Einheit einen zum Getriebe hin aufgeweiteten Bereich aufweist und/oder einen Konus-Bereich, welcher die Schlitzbuchse gegen das Getriebe drückt, insbesondere im von der Ausnehmung überdeckten axialen Bereich,
insbesondere so, dass abhängig von der Drehstellung der Mutter die Konus-Einheit axial verschoben ist und die Schlitzbuchse von der Konus-Einheit an die Ausnehmung andrückbar ist,
insbesondere wobei die Konus-Einheit eine Konusbuchse und eine mit der Konusbuchse fest verbundene oder einstückig ausgeführte Gewindehülse aufweist.

Von Vorteil ist dabei, dass die Öleinfüllvorrichtung an der Ausnehmung des Getriebes kraftschlüssig lösbar verbindbar ist. Dabei sind jedoch Schlitze der Schlitzbuchse zum Luftausgleich vorhanden. Somit ist es ermöglicht, dass das ins Getriebe eingefüllte Ölvolumen ein entsprechendes Luftvolumen verdrängt und der Luftausgleich stattfindet, also kein Überdruck aufgebaut wird, insbesondere welcher das Zuführen von Öl erschweren würde. Die Betätigung der Schlitzbuchse ist durch Drehen, also Schrauben einer mit dem Außengewinde der Konus-Einheit im Eingriff sich befindenden Mutter ermöglicht. Somit ist ein einfaches Betätigen ermöglicht.

Bei einer vorteilhaften Ausgestaltung weist die Schlitzbuchse in Umfangsrichtung voneinander beabstandete Schlitze auf, welche einen axialen Bereich überdecken, der mit dem von der Ausnehmung überdeckten axialen Bereich überlappt oder der den von der Ausnehmung überdeckten axialen Bereich umfasst,
insbesondere wobei die Schlitze in Umfangsrichtung voneinander regelmäßig beabstandet sind. Von Vorteil ist dabei, dass ein Luftdruckausgleich ausführbar ist. Somit entweicht das durch das eingefüllte Ölvolumen verdrängte Luftvolumen ohne besonderen Widerstand.

Bei einer vorteilhaften Ausgestaltung weist die Konus-Einheit eine axial durchgehende Ausnehmung auf, welche einerseits in den Innenraumbereich des Getriebes mündet und andererseits mit einer Ölzufuhröffnung verbunden ist und welche mittels eines axial verschiebbar angeordneten Kolbens öffenbar und/oder verschließbar ist. Von Vorteil ist dabei, dass Öl durch die Ausnehmung dem Innenraumbereich des Getriebes zuführbar ist. Somit ist das Steuern des Ölstroms in einfacher Weise ermöglicht.

Bei einer vorteilhaften Ausgestaltung ist mit der Mutter ein Betätigungshebel verbunden und/oder die Mutter ist in einer Aufnahme formschlüssig aufgenommen, an welcher ein Betätigungshebel befestigt ist, insbesondere ein radial gerichteter Betätigungshebel. Von Vorteil ist dabei, dass eine einfache Betätigung insbesondere mit einem geringen Kraftaufwand ausführbar ist.

Bei einer vorteilhaften Ausgestaltung ist der Kolben mit einer Kolbenstange verbunden, welche axial verschiebbar ist, insbesondere axial linear verschiebbar ist, insbesondere axial hin- und/oder herverschiebbar ist. Von Vorteil ist dabei, dass ein Steuern des Ölstroms in einfacher Weise ermöglicht ist, indem die Kolbenstange hin- oder herbewegt wird.

Bei einer vorteilhaften Ausgestaltung weist die Konus-Einheit ein hohles Zylinderteil auf, in welchen die Kolbenstange hineinragt und mittels Gewindehülsen und/oder mittels einer Kolbendichtung zur Innenwandung des Zylinderteils hin abgedichtet ist,
insbesondere wobei die Gewindehülsen mit der Kolbenstange schraubverbunden sind und die Kolbendichtung formschlüssig mit den Gewindehülsen verbunden ist, insbesondere zwischen den Gewindehülsen eingeklemmt ist. Von Vorteil ist dabei, dass ein Druckluftgesteuertes Betätigen der Öleinfüllvorrichtung ausführbar ist.

Die Druckluft, insbesondere die auch allgemein als Pressluft bezeichenbar ist, wird in einer Anlage von einem Kompressor erzeugt und mittels Schläuchen und/oder Rohren zugeleitet.

Bei einer vorteilhaften Ausgestaltung ist das Zylinderteil einstückig an der Konus-Einheit ausgeformt und/oder fest verbunden mit der Gewindehülse. Von Vorteil ist dabei, dass ein einfaches Herstellen ermöglicht ist.

Bei einer vorteilhaften Ausgestaltung weist das Zylinderteil eine radial durchgehende Öffnung auf, die als Ölzufuhröffnung fungiert. Von Vorteil ist dabei, dass ein Ölanschluss am Zylinderteil angeordnet ist und somit Öl durch das Zylinderteil zuführbar ist und der Ölstrom somit steuerbar ist.

Bei einer vorteilhaften Ausgestaltung ist am Kolben eine Dichtung, insbesondere ein O-Ring, angeordnet zum dichten Verschließen der Mündungsöffnung der Konus-Einheit, insbesondere der Konusbuchse, zum Innenraumbereich des Getriebes hin. Von Vorteil ist dabei, dass ein dichtes Verschließen ausführbar ist. Alternativ ist auch ein dichtes Verschließen erreichbar, wenn die Konusbuchse flächig an die Schlitzbuchse angedrückt wird, so dass eine Kegelabschnittsfläche gegenseitige Berührfläche ist. Dabei wird die Materialpaarung Stahl auf Stahl vorteiligerweise verwendet. Bei großem Anpressdruck ist eine ausreichende Dichtigkeit erreichbar.

Bei einer vorteilhaften Ausgestaltung weist das Zylinderteil einen ersten Drucklufteinlass axial vor und einen zweiten Drucklufteinlass axial hinter der Kolbendichtung auf,
insbesondere wobei der erste Drucklufteinlass als radial durchgehende Ausnehmung im Zylinderteil ausgeführt ist und der zweite Drucklufteinlass als radial durchgehende Ausnehmung im Zylinderteil ausgeführt ist. Von Vorteil ist dabei, dass ein Druckluftzufuhrgesteuertes Befüllen mit Öl ausführbar ist.

Bei einer vorteilhaften Ausgestaltung ist die Kolbenstange in einer Führungsbuchse linear geführt, welche in der axial durchgehenden Ausnehmung der Konus-Einheit, insbesondere der Konusbuchse, angeordnet ist,
wobei die Führungsbuchse axial durchgehende, insbesondere in Umfangsrichtung voneinander beabstandete, insbesondere in Umfangsrichtung voneinander regelmäßig beabstandete, Ausnehmungen aufweist, insbesondere welche radial von der Kolbenstange beabstandet sind. Von Vorteil ist dabei, dass die Kolbenstange stabil gelagert ist.

Bei einer vorteilhaften Ausgestaltung ist das Zylinderteil von einer Verschlussschraube und/oder von einem Verschlussteil am vom Getriebe abgewandten Endbereich des Zylinderteils geschlossen. Von Vorteil ist dabei, dass im Zylinderteil Innenraumbereiche für Druckluftzufuhr vorgesehen sind und somit eine Hinbewegung oder Herbewegung der Kolbenstange ausführbar ist.

Bei einer vorteilhaften Ausgestaltung leitet ein am Zylinderteil, an der Verschlussschraube und/oder an dem Verschlussteil abgestütztes Federteil Federkraft in die Kolbenstange ein und/oder drückt auf die Kolbenstange. Von Vorteil ist dabei, dass bei Ausfall der Druckluft ein Verschließen und somit Beenden der Befüllung automatisch bewirkbar ist.

Bei einer vorteilhaften Ausgestaltung ist im Zylinderteil eine Buchse aufgenommen, insbesondere eingepresst,
wobei die Kolbenstange durch die Buchse hindurchragt, wobei zwischen Kolbenstange und Buchse eine Dichtung, insbesondere zumindest eine Stangendichtung, angeordnet ist, insbesondere welche die Kolbenstange zur Buchse hin abdichtet. Von Vorteil ist dabei, dass der Druckluft-befüllte Bereich vom ölbefüllten Bereich abgedichtet ist, also getrennt ist.

Bei einer vorteilhaften Ausgestaltung weist die Mutter eine Ringnut auf, in welcher eine Sicherungsscheibe aufgenommen ist, die mit der Schlitzbuchse fest verbunden ist,
insbesondere wobei die Sicherungsscheibe als Drehlagerung für die Mutter fungiert, insbesondere wobei die Mutter axial an der Sicherungsscheibe abgestützt ist, insbesondere auf die Sicherungsscheibe drückt. Von Vorteil ist dabei, dass eine einfache Drehlagerung der Mutter bewirkt ist, die auch als Begrenzung der axialen Bewegungsfreiheit wirkt. Somit ist die Mutter axial begrenzt, drehbar und an der Sicherungsscheibe abstützbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

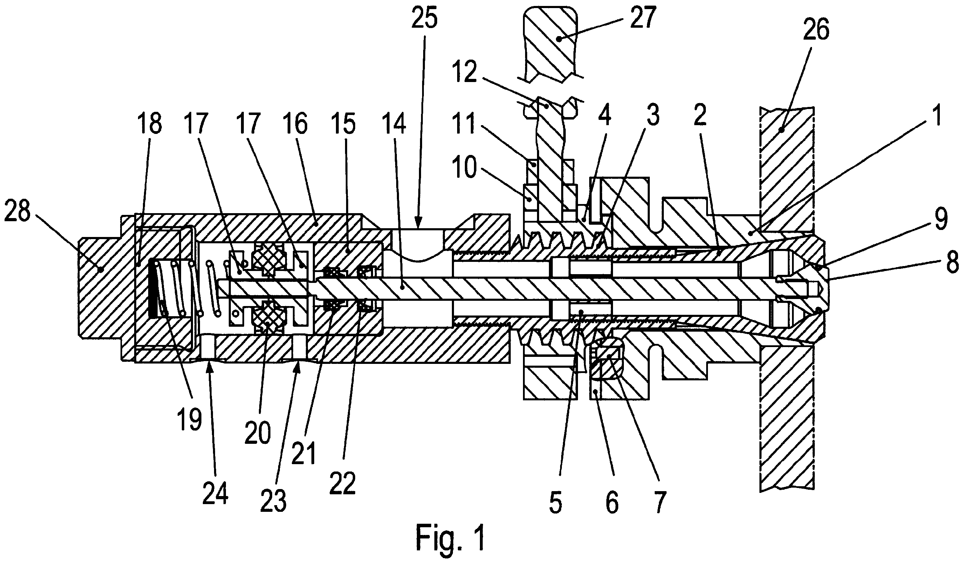

In der Figur 1 ist eine Schnittansicht eines erfindungsgemäßen Öleinfüllsystems für ein Getriebe gezeigt.

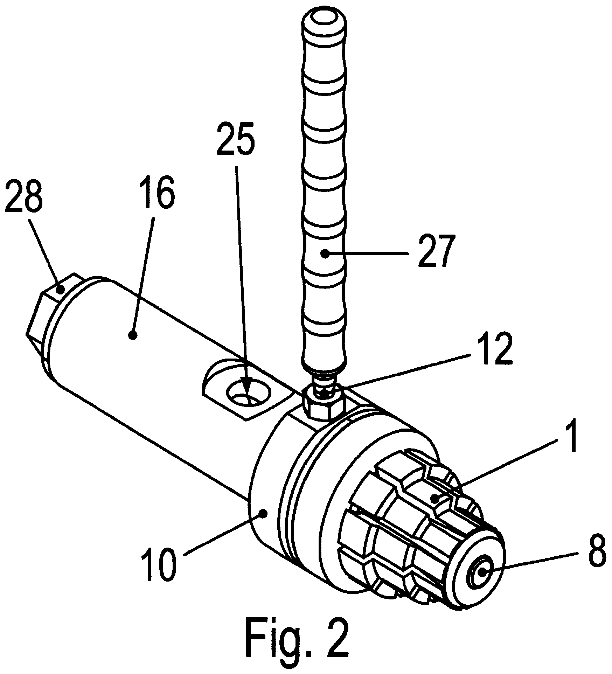

In der Figur 2 ist eine zugehörige Schrägansicht aus einer ersten Blickrichtung dargestellt.

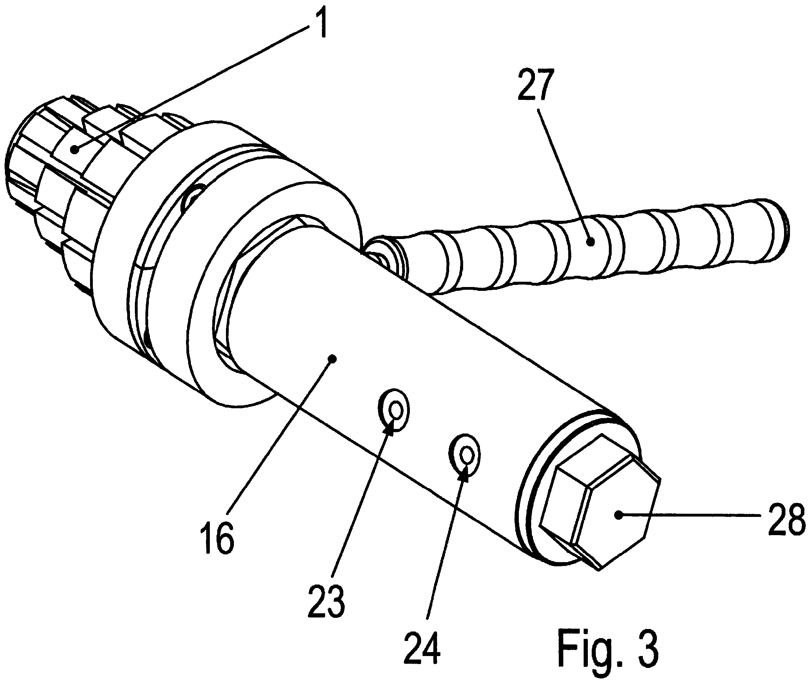

In der Figur 3 ist eine weitere Schrägansicht aus einer zweiten Blickrichtung dargestellt.

Wie in den Figuren gezeigt, weist ein mit Öl mindestens teilweise zu befüllendes Getriebe eine Ausnehmung auf, mit welcher eine Schlitzbuchse 1 kraftschlüssig mittels Aufspreizen verbunden ist.

Hierzu weist die Schlitzbuchse 1 mindestens zwei zylindrische Aufnahmebereiche auf, deren Durchmesser unterschiedlich sind. Axial begrenzt ist der jeweilige Aufnahmebereich durch eine Stufe, also einen Durchmessersprung. Die Schlitzbuchse 1 ist also für unterschiedlich große Ausnehmungen im Getriebe verwendbar.

In Umfangsrichtung regelmäßig voneinander beabstandete, axial durch die Aufnahmebereiche durchgehende Schlitze münden durch die Ausnehmung hindurch in den Innenraum des Getriebes, so dass eine Belüftung beim Einfüllen bewirkt ist. Insbesondere ist ein Luftaustritt bei Einfüllen von Öl ermöglicht.

Das radiale Aufspreizen der Aufnahmebereiche gegen die Wandung der Ausnehmung, also gegen das Gehäuseteil 26, ist bewirkt durch eine radial innerhalb der Schlitzbuchse 1 angeordnete Konusbuchse 2, welche zum Innenraum des Getriebes hin verbreitert ist.

Die Konusbuchse 2 ist mit einer Gewindehülse 3 verbunden, insbesondere stoffschlüssig, also geklebt, schraubverbunden. Die Gewindehülse 3 ist mit einem Zylinderteil 16 verbunden, insbesondere stoffschlüssig, also geklebt, schraubverbunden. Die Gewindehülse 3 ist also axial zwischen Konusbuchse 2 und Zylinderteil 16 angeordnet. Dabei ist sie zwar zu Herstellungszwecken schraubverbunden, jedoch ist Klebstoff eingebracht in die im Eingriff stehenden Gewindebereiche der Schraubverbindung. Auf diese Weise ist also die Gewindehülse samt Zylinderteil 16 und Konusbuchse 2 mehrteilig aufgebaut, aber als eine feste Komponente verwendbar.

Die Schlitzbuchse 1 weist als Buchse eine mittig angeordnete, axial durchgehende Ausnehmung auf, in welche die Konusbuchse 2 hineinragt oder durchragt.

Die mit der Konusbuchse 2 verbundene Gewindehülse 3 weist ein Außengewinde auf, insbesondere ein Außengewinde mit trapezförmiger Kontur.

Auf das Außengewinde ist eine Mutter 4 aufgeschraubt, welche an der Schlitzbuchse 1 anliegt.

Zum Betätigen, insbesondere Schraubdrehen, der Mutter 4 ist diese in einem Aufnahmeteil 10 aufgenommen, mit welchem eine Schraube 12 verbunden ist. Die Schraube 12 ist hierzu in eine radial gerichtete Gewindebohrung des Aufnahmeteils 10 eingeschraubt. Mittels einer weiteren Mutter 11, insbesondere Sechskantmutter, ist die Schraube 12 in der Gewindebohrung gesichert. Zur Verlängerung und Vergrößerung des Drehmoments beim Betätigen, ist ein Betätigungshebel 27 mit der Schraube 12 verbunden. Somit ist die Mutter 4 mit geringem Kraftaufwand drehbar, während das Zylinderteil 16 festgehalten wird.

Beim Drehen der Mutter 4 wird also die Konusbuchse 2 axial verschoben und drückt somit auf den dem Getriebe zugewandten axialen Endbereich der Schlitzbuchse 1, so dass dieser Bereich aufgeweitet wird. Die Mutter 4 weist eine umlaufende Ringnut auf, in welcher eine zweiteilige Sicherungsscheibe 6 aufgenommen ist, die schraubverbunden mit der Schlitzbuchse ist. Somit ist eine Verliersicherung realisiert und eine Drehlagerung der Mutter 4 erreicht.

Die Mutter 4 ist somit drehbar an der Sicherungsscheibe 6 angeordnet, stützt sich aber axial ab und somit auch an der Schlitzbuchse 1, während die Konusbuchse 2 axial vom Getriebe weggeschoben wird. Die Sicherungsscheibe 6 ist mit der Schlitzbuchse 1 schraubverbunden mittels einer vorzugsweise als Senkschraube ausgeführten Schraube 7.

Die Konusbuchse 2 und die Gewindehülse 3 sind jeweils hohl ausgeführt, also mit einer axial durchgehenden Ausnehmung, welche in den hohlen Bereich des Zylinderteils 16 mündet.

Auf der vom Getriebe abgewandten axialen Seite des Zylinderteils 16 ist ein Verschlussteil 28 angeordnet, welches das Zylinderteil am axialen Endbereich verschließt.

Die mittig in der Konusbuchse 2 angeordnete Ausnehmung mündet an ihrem axialen Endbereich in den Innenraumbereich des Getriebes. Jedoch ist die Mündungsöffnung der Konusbuchse 2 von einem Kolben 8 verschließbar, wobei am Kolben 8 eine Dichtung 9, insbesondere O-Ring, angeordnet ist zur Erhöhung der Dichtigkeit.

Der Kolben 8 ist mit einer Kolbenstange 14 verbunden, welche über eine Führungsbuchse 5 abgestützt ist, welche axial durchgehende Ausnehmungen aufweist, die in Umfangsrichtung vorzugsweise regelmäßig voneinander beabstandet sind, und welche in der mittig angeordneten axial durchgehenden Ausnehmung der Konusbuchse 2 abgestützt ist.

In den Hohlraum des Zylinderteils 16 mündet eine Ölzufuhröffnung, insbesondere Ölanschluss 25, so dass das mittels Schlauch zum Ölanschluss 25 zugeführte Öl durch die mittig angeordnete Ausnehmung im Zylinderteil 16, in der Gewindehülse 3 und der Konusbuchse 2 in den Innenraumbereich des Getriebes zuführbar ist, wenn der Kolben 8 von der Kolbenstange 14 axial von der Mündung der Konusbuchse 2 weggezogen wird.

In der Ausnehmung des Zylinderteils 16 ist auf der von dem Getriebe abgewandten Seite der Ölzufuhröffnung, eine Buchse 15 aufgenommen, insbesondere eingepresst. Die Kolbenstange 14 ist durch eine mittig in der Buchse 15 angeordnete Ausnehmung durchgeführt und mittels Stangendichtungen 21 und 22 zur Buchse 15 hin abgedichtet.

Das Zylinderteil 16 ist von dem Verschlussteil 28 zusammen mit einer Verschlussschraube 18 verschlossen. Ein Federelement 19 drückt auf die Kolbenstange 14 und ist an der Verschlussschraube 18 und somit am Verschlussteil 28 und indirekt somit auch am Zylinderteil 16 abgestützt.

Die Kolbenstange 14 wird also in Richtung auf das Getriebe gedrückt, so dass der Kolben 8 die Mündungsöffnung verschließt und keine Ölzufuhr an das Getriebe ermöglicht ist.

Die Kolbenstange 14 ist mit als mit dem Zylinderteil 16 in Wirkverbindung tretenden Kolben fungierenden Gewindehülsen 17 verbunden, die mittels einer Kolbendichtung 20 zum Zylinderteil 16 hin abgedichtet sind. Die Gewindehülsen 17 sind auf einen Gewindeabschnitt der Kolbenstange 14 aufgeschraubt. Die Kolbendichtung 20 ist ringförmig ausgeführt und reicht von den Gewindehülsen 17 zum Zylinderteil 16.

Am Zylinderteil 16 sind zwei radial durchgehende Ausnehmungen 23, 24 angeordnet, welche jeweils als Anschluss für je einen Druckluftschlauch vorgesehen sind. Dabei ist axial zwischen den beiden Ausnehmungen die Kolbendichtung 20 angeordnet.

Der von der durch die erste der beiden Ausnehmungen 23, 24 zugeführten Druckluft beaufschlagbare Innenraumbereich im Zylinderteil 16 ist begrenzt durch die Buchse 15 samt Stangendichtung 21 sowie das Zylinderteil 16 selbst und die Kolbendichtung 20 samt Gewindehülse 17.

Der von der durch die zweite der beiden Ausnehmungen 23, 24 zugeführten Druckluft beaufschlagbare Innenraumbereich im Zylinderteil 16 ist begrenzt durch die Verschlussschraube 18 samt Verschlussteil 28 sowie das Zylinderteil 16 selbst und die Kolbendichtung 20 samt Gewindehülsen 17.

Abhängig von der Zufuhr von Druckluft durch die erste oder zweite Ausnehmung 23, 24 wird die Kolbendichtung 20 mit den mit ihr formschlüssig verbundenen Gewindehülsen 17 axial hin oder herbewegt. Entsprechend wird die Kolbenstange von den Gewindehülsen 17 hin- oder herbewegt, also gibt der Kolben 8 die Mündungsöffnung der Ausnehmung der Kolbenstange 2 frei oder nicht.

Somit ist eine mittels Druckluft betätigbare Ölzufuhr ausführbar. Bei Ausfall der Druckluft wird ein automatisches Schließen der Mündungsöffnung mittels der vom Federteil 19 erzeugten Federkraft bewirkt.

Bei weiteren erfindungsgemäßen Ausführungsbeispielen sind Verschlussteil 28 und Verschlussschraube 18 einstückig, also einteilig, ausgeführt.

### Bezugszeichenliste

1 Schlitzbuchse
2 Konusbuchse
3 Gewindehülse
4 Mutter, insbesondere Mutter mit Innengewinde
5 Führungsbuchse
6 Sicherungsscheibe
7 Schraube, insbesondere Senkschraube
8 Kolben
9 Dichtung
10 Aufnahmeteil
11 Sechskantmutter
12 Schraube
14 Kolbenstange
15 Buchse
16 Zylinderteil
17 Gewindehülse
18 Verschlussschraube
19 Federteil
20 Kolbendichtung
21 Stangendichtung
22 Stangendichtung
23 Druckluftanschluss
24 Druckluftanschluss
25 Ölanschluss
26 Gehäuseteil des Getriebes
27 Betätigungshebel
28 Verschlussteil

## Patentansprüche

1. System mit Öleinfüllvorrichtung und mit einem Getriebe, wobei das Getriebe eine Ausnehmung aufweist,
**dadurch gekennzeichnet, dass**
die Öleinfüllvorrichtung eine Schlitzbuchse (1) aufweist, welche eine axial durchgehende Ausnehmung aufweist, durch welche eine Konus-Einheit (2, 3) hindurchragt, welche auf der vom Getriebe abgewandten Seite der Schlitzbuchse (1) ein Außengewinde aufweist, auf welches eine Mutter (4) aufgeschraubt ist,
wobei die Konus-Einheit (2, 3) einen zum Getriebe hin aufgeweiteten Bereich aufweist, welcher die Schlitzbuchse (1) gegen das Getriebe drückt.

2. System nach Anspruch 1,
**dadurch gekennzeichnet, dass**
die Schlitzbuchse (1) in Umfangsrichtung voneinander beabstandete Schlitze aufweist, welche einen axialen Bereich überdecken, der mit dem von der Ausnehmung überdeckten axialen Bereich überlappt oder der den von der Ausnehmung überdeckten axialen Bereich umfasst,
insbesondere wobei die Schlitze in Umfangsrichtung voneinander regelmäßig beabstandet sind.

3. System nach mindestens einem der vorangegangenen Ansprüche,
**dadurch gekennzeichnet, dass**
die Konus-Einheit (2, 3) eine axial durchgehende Ausnehmung aufweist, welche einerseits in den Innenraumbereich des Getriebes mündet und andererseits mit einer Ölzufuhröffnung verbunden ist und welche mittels eines axial verschiebbar angeordneten Kolbens öffenbar oder verschließbar ist.

4. System nach mindestens einem der vorangegangenen Ansprüche,
**dadurch gekennzeichnet, dass**
die Mutter (4) in einer Aufnahme formschlüssig aufgenommen ist, an welcher ein Betätigungshebel (27) befestigt ist, insbesondere ein radial gerichteter Betätigungshebel (27).

5. System nach Anspruch 3,
**dadurch gekennzeichnet, dass**
der Kolben mit einer Kolbenstange (14) verbunden ist, welche axial verschiebbar ist, insbesondere axial linear verschiebbar ist, insbesondere axial hin- und/oder herverschiebbar ist.

6. System nach Anspruch 5,
**dadurch gekennzeichnet, dass**
die Konus-Einheit (2, 3) mit einem hohlen Zylinderteil (16) verbunden ist, in welches die Kolbenstange (14) hineinragt und mittels Gewindehülsen (3, 17) oder mittels einer Kolbendichtung (20) zur Innenwandung des Zylinderteils (16) hin abgedichtet ist,
insbesondere wobei die Gewindehülsen (3, 17) mit der Kolbenstange (14) schraubverbunden sind und die Kolbendichtung (20) formschlüssig mit den Gewindehülsen (3, 17) verbunden ist, insbesondere zwischen den Gewindehülsen (3, 17) eingeklemmt ist.

7. System nach Anspruch 6,
**dadurch gekennzeichnet, dass**
das Zylinderteil (16) einstückig an der Konus-Einheit (2, 3) ausgeformt ist oder fest verbunden ist mit der Konus-Einheit (2, 3).

8. System nach Anspruch 6 oder 7,
**dadurch gekennzeichnet, dass**
das Zylinderteil (16) eine radial durchgehende Öffnung aufweist, die als Ölzufuhröffnung fungiert.

9. System nach einem der Ansprüche 3 bis 8,
**dadurch gekennzeichnet, dass**
am Kolben eine Dichtung, insbesondere ein O-Ring, angeordnet ist zum dichten Verschließen der Mündungsöffnung der Konus-Einheit (2, 3), insbesondere der Konusbuchse (2), zum Innenraumbereich des Getriebes hin
oder dass
zum dichten Verschließen der Mündungsöffnung die Konusbuchse (2) eine Kegelabschnittsfläche als Berührfläche aufweist zur Schlitzbuchse (1).

10. System nach einem der Ansprüche 6 bis 9,
**dadurch gekennzeichnet, dass**
das Zylinderteil (16) einen ersten Drucklufteinlass axial vor und einen zweiten Drucklufteinlass axial hinter der Kolbendichtung (20) aufweist,
insbesondere wobei der erste Drucklufteinlass als radial durchgehende Ausnehmung im Zylinderteil (16) ausgeführt ist und der zweite Drucklufteinlass als radial durchgehende Ausnehmung im Zylinderteil (16) ausgeführt ist.

11. System nach einem der Ansprüche 5 bis 10,
**dadurch gekennzeichnet, dass**
die Kolbenstange (14) in einer Führungsbuchse (5) linear geführt ist, welche in der axial durchgehenden Ausnehmung der Konus-Einheit, insbesondere der Konusbuchse (2), angeordnet ist, insbesondere eingeschraubt ist,
wobei die Führungsbuchse (5) axial durchgehende, insbesondere in Umfangsrichtung voneinander beabstandete, insbesondere in Umfangsrichtung voneinander regelmäßig beabstandete, Ausnehmungen aufweist, insbesondere welche radial von der Kolbenstange (14) beabstandet sind.

12. System nach einem der Ansprüche 5 bis 11,
**dadurch gekennzeichnet, dass**
das Zylinderteil (16) von einer Verschlussschraube (18) oder von einem Verschlussteil (28) am vom Getriebe abgewandten Endbereich des Zylinderteils (16) geschlossen ist.

13. System nach Anspruch 12,
**dadurch gekennzeichnet, dass**
ein am Zylinderteil (16), an der Verschlussschraube (18) oder an dem Verschlussteil (28) abgestütztes Federteil (19) Federkraft in die Kolbenstange (14) einleitet oder auf die Kolbenstange (14) drückt.

14. System nach einem der Ansprüche 6 bis 13,
**dadurch gekennzeichnet, dass**
im Zylinderteil (16) eine Buchse (15) aufgenommen ist, insbesondere eingepresst ist,
wobei die Kolbenstange (14) durch die Buchse (15) hindurchragt, wobei zwischen Kolbenstange (14) und Buchse (15) eine Dichtung, insbesondere zumindest eine Stangendichtung (21, 22), angeordnet ist, insbesondere welche die Kolbenstange (14) zur Buchse (15) hin abdichtet.

15. System nach mindestens einem der vorangegangenen Ansprüche,
**dadurch gekennzeichnet, dass**
die Mutter (4) eine Ringnut aufweist, in welcher eine zweiteilige Sicherungsscheibe (6) aufgenommen ist, die mit der Schlitzbuchse (1) fest verbunden ist,
insbesondere wobei die Sicherungsscheibe (6) als Drehlagerung für die Mutter (4) fungiert, insbesondere wobei die Mutter (4) axial an der Sicherungsscheibe (6) abgestützt ist, insbesondere auf die Sicherungsscheibe (6) drückt.

## Claims

1. A system with an oil filler device and with a gear unit, wherein the gear unit has a cutout,
**characterised in that**
the oil filler device has a slotted bush (1) which has an axially continuous cutout, through which projects a cone unit (2, 3) which has on that side of the slotted bush (1) which is remote from the gear unit an external thread onto which a nut (4) is screwed,
the cone unit (2, 3) having a region widened towards the gear unit which presses the slotted bush (1) against the gear unit.

2. A system according to claim 1,
**characterised in that**
the slotted bush (1) has slots spaced apart from each other in the peripheral direction which cover an axial region which overlaps with the axial region covered by the cutout or which encompasses the axial region covered by the cutout,
in particular with the slots being regularly spaced apart from each other in the peripheral direction.

3. A system according to at least one of the preceding claims,
**characterised in that**
the cone unit (2, 3) has an axially continuous cutout which on one hand opens into the interior region of the gear unit and on the other hand is connected to an oil supply opening, and which can be opened or closed by means of a piston arranged axially displaceably.

4. A system according to at least one of the preceding claims,
**characterised in that**
the nut (4) is received in positive manner in a receptacle to which an actuating lever (27) is fastened, in particular a radially-directed actuating lever (27).

5. A system according to claim 3,
**characterised in that**
the piston is connected to a piston rod (14) which is axially displaceable, in particular is axially linearly displaceable, in particular is displaceable axially back or forth.

6. A system according to claim 5,
**characterised in that**
the cone unit (2, 3) is connected to a hollow cylinder part (16) into which the piston rod (14) projects and is sealed off by means of threaded sleeves (3, 17) or by means of a piston seal (20) from the inner wall of the cylinder part (16),
in particular with the threaded sleeves (3, 17) being screw-connected to the piston rod (14) and the piston seal (20) being connected in positive manner to the threaded sleeves (3, 17), in particular wedged between the threaded sleeves (3, 17).

7. A system according to claim 6,
**characterised in that**
the cylinder part (16) is formed in one piece on the cone unit (2, 3) or is connected securely to the cone unit (2, 3).

8. A system according to claim 6 or 7,
**characterised in that**
the cylinder part (16) has a radially continuous opening which functions as an oil supply opening.

9. A system according to one of claims 3 to 8,
**characterised in that**
a seal, in particular an O-ring, is arranged on the piston for tightly closing the mouth opening of the cone unit (2, 3), in particular of the cone bush (2), towards the interior region of the gear unit
or **in that**
for tightly closing the mouth opening the cone bush (2) has a conical portion face as a contact face with the slotted bush (1).

10. A system according to one of claims 6 to 9,
**characterised in that**
the cylinder part (16) has a first compressed-air inlet axially in front and a second compressed-air inlet axially behind the piston seal (20),
in particular with the first compressed-air inlet being embodied as a radially continuous cutout in the cylinder part (16) and the second compressed-air inlet being embodied as a radially continuous cutout in the cylinder part (16).

11. A system according to one of claims 5 to 10,
**characterised in that**
the piston rod (14) is linearly guided in a guide bush (5) which is arranged, in particular screwed-in, in the axially continuous cutout of the cone unit, in particular of the cone bush (2),
the guide bush (5) having axially continuous cutouts, in particular spaced apart from each other in the peripheral direction, in particular regularly spaced apart from each other in the peripheral direction, in particular which cutouts are radially spaced apart from the piston rod (14).

12. A system according to one of claims 5 to 11,
**characterised in that**
the cylinder part (16) is closed by a screw plug (18) or by a closure part (28) on that end region of the cylinder part (16) which is remote from the gear unit.

13. A system according to claim 12,
**characterised in that**
a spring part (19) supported on the cylinder part (16), on the screw plug (18) or on the closure part (28) introduces spring force into the piston rod (14) or presses on the piston rod (14).

14. A system according to one of claims 6 to 13,
**characterised in that**
a bush (15) is received, in particular pressed in, in the cylinder part (16),
the piston rod (14) projecting through the bush (15), with a seal, in particular at least one rod seal (21, 22), being arranged between the piston rod (14) and bush (15), in particular which seals off the piston rod (14) from the bush (15).

15. A system according to at least one of the preceding claims,
**characterised in that**
the nut (4) has an annular groove in which a two-part securing disc (6) is received, which disc is connected securely to the slotted bush (1),
in particular with the securing disc (6) functioning as a rotary mounting for the nut (4), in particular with the nut (4) being supported axially on the securing disc (6), in particular pressing on the securing disc (6).

## Revendications

1. Système comprenant un dispositif de déversement d'huile et une transmission, laquelle transmission est munie d'un évidement,
**caractérisé par le fait que**
le dispositif de déversement d'huile est pourvu d'un manchon fendu (1), doté d'un évidement axialement ininterrompu traversé par une unité conique (2, 3) qui comporte, du côté dudit manchon fendu (1) pointant à l'opposé de la transmission, un filetage extérieur sur lequel un écrou (4) est vissé,
ladite unité conique (2, 3) présentant une région évasée en direction de la transmission, qui presse le manchon fendu (1) contre ladite transmission.

2. Système selon la revendication 1,
**caractérisé par le fait que**
le manchon fendu (1) comporte des fentes espacées les unes des autres dans la direction périphérique, couvrant une région axiale qui est en chevauchement avec la région axiale couverte par l'évidement, ou englobe la région axiale couverte par ledit évidement, sachant notamment que lesdites fentes sont espacées régulièrement les unes des autres dans la direction périphérique.

3. Système selon au moins l'une des revendications précédentes,
**caractérisé par le fait que**
l'unité conique (2, 3) est munie d'un évidement axialement ininterrompu qui débouche, d'une part, dans la zone d'espace intérieur de la transmission, est relié d'autre part à l'orifice d'arrivée d'huile, et peut être ouvert ou obturé au moyen d'un piston agencé à coulissement axial.

4. Système selon au moins l'une des revendications précédentes,
**caractérisé par le fait que**
l'écrou (4) est intégré, par complémentarité de formes, dans un logement auquel est fixé un levier d'actionnement (27), en particulier un levier d'actionnement (27) dirigé radialement.

5. Système selon la revendication 3,
**caractérisé par le fait que**
le piston est relié à une tige (14) apte à coulisser axialement, notamment apte à coulisser linéairement dans le sens axial et pouvant, en particulier, accomplir des coulissements à va-et-vient dans le sens axial.

6. Système selon la revendication 5,
**caractérisé par le fait que**
l'unité conique (2, 3) est reliée à une partie cylindrique creuse (16) dans laquelle la tige (14) du piston pénètre et est rendue étanche, en direction de la paroi intérieure de ladite partie cylindrique (16), au moyen de douilles taraudées (3, 17) ou au moyen d'une garniture (20) d'étanchement dudit piston,
sachant, en particulier, que les douilles taraudées (3, 17) sont reliées par vissage à la tige (14) du piston et que la garniture (20) d'étanchement dudit piston est reliée auxdites douilles taraudées (3, 17) par complémentarité de formes, notamment enserrée entre lesdites douilles taraudées (3, 17).

7. Système selon la revendication 6,
**caractérisé par le fait que**
la partie cylindrique (16) est ménagée d'un seul tenant avec l'unité conique (2, 3), ou reliée rigidement à ladite unité conique (2, 3).

8. Système selon la revendication 6 ou 7,
**caractérisé par le fait que**
la partie cylindrique (16) est munie d'un orifice radialement ininterrompu, remplissant la fonction d'un orifice d'arrivée d'huile.

9. Système selon l'une des revendications 3 à 8,
**caractérisé par le fait**
**qu'**une garniture d'étanchement, en particulier une bague torique, est implantée sur le piston en vue d'obturer hermétiquement l'orifice d'embouchure de l'unité conique (2, 3), notamment du manchon conique (2) en direction de la zone d'espace intérieur de la transmission ;
ou par le fait que,
pour obturer hermétiquement ledit orifice d'embouchure, ledit manchon conique (2) comporte une surface de segment tronconique en tant que surface de contact vis-à-vis du manchon fendu (1).

10. Système selon l'une des revendications 6 à 9,
**caractérisé par le fait que**
la partie cylindrique (16) comprend une première admission d'air comprimé et une seconde admission d'air comprimé respectivement disposées, dans le sens axial, devant et derrière la garniture (20) d'étanchement du piston,
ladite première admission d'air comprimé et ladite seconde admission d'air comprimé étant réalisées, respectivement, en tant qu'évidement radialement ininterrompu, pratiqué dans la partie cylindrique (16), et en tant qu'évidement radialement ininterrompu pratiqué dans ladite partie cylindrique (16).

11. Système selon l'une des revendications 5 à 10,
**caractérisé par le fait que**
la tige (14) du piston est guidée linéairement dans un manchon de guidage (5) intégré, notamment vissé dans l'évidement axialement ininterrompu de l'unité conique, en particulier du manchon conique (2),
lequel manchon de guidage (5) comporte des évidements axialement ininterrompus, notamment espacés les uns des autres dans la direction périphérique, en particulier régulièrement espacés les uns des autres dans la direction périphérique et situés, en particulier, radialement à distance de ladite tige (14) du piston.

12. Système selon l'une des revendications 5 à 11,
**caractérisé par le fait que**
la partie cylindrique (16) est fermée par une vis d'obturation (18), ou par une partie obturatrice (28), au niveau de la région extrême de ladite partie cylindrique (16) qui pointe à l'opposé de la transmission.

13. Système selon la revendication 12,
**caractérisé par le fait**
**qu'**une pièce élastique (19) prenant appui contre la partie cylindrique (16), contre la vis d'obturation (18) ou contre la partie obturatrice (28), introduit une force élastique dans la tige (14) du piston ou exerce une pression sur ladite tige (14) du piston.

14. Système selon l'une des revendications 6 à 13,
**caractérisé par le fait**
**qu'**un coussinet (15) est logé, notamment emmanché à force dans la partie cylindrique (16),
la tige (14) du piston traversant ledit coussinet (15) de part en part, sachant qu'une garniture d'étanchement, notamment au moins une garniture (21, 22) d'étanchement de tige, est interposée entre ladite tige (14) du piston et ledit coussinet (15) et assure, en particulier, l'étanchéité de ladite tige (14) du piston en direction dudit coussinet (15).

15. Système selon au moins l'une des revendications précédentes,
**caractérisé par le fait que**
l'écrou (4) comporte une rainure annulaire dans laquelle est logé un disque d'arrêt (6) en deux parties, relié rigidement au manchon fendu (1),
sachant notamment que ledit disque d'arrêt (6) remplit la fonction d'un palier tournant dévolu à l'écrou (4),
lequel écrou (4) est, en particulier, axialement en appui contre ledit disque d'arrêt (6) en exerçant notamment une pression sur ledit disque d'arrêt (6).
